# EUROPEAN PATENT SPECIFICATION

(11) **EP 2 141 075 B1**
(45) Date of publication and mention of the grant of the patent: **31.10.2012**
(21) Application number: 07742632.8
(22) Date of filing: 27.04.2007
(51) Int. Cl.: B65D 1/02, B23K 26/00, B29C 49/04, B65D 1/00, B65D 17/32, B65D 35/44, B29C 49/42, B29K 67/00, B29L 22/00

(54) **POLYESTER RESIN CONTAINER WITH FRACTURABLE PORTION AND ITS PRODUCTION METHOD**
POLYESTERHARZBEHÄLTER MIT SOLLBRUCHTEIL UND HERSTELLUNGSVERFAHREN DAFÜR
CONTENANT EN RÉSINE POLYESTER PRÉSENTANT UNE PARTIE DE RUPTURE ET PROCÉDÉ DE PRODUCTION DUDIT CONTENANT

(43) Date of publication of application: 06.01.2010
(73) Proprietor: DAIWA CAN COMPANY, Tokyo 103-8240 (JP)
(72) Inventor: INOUE, Yoichiro, Tokyo 103-8240 (JP); YAMADA, Junji, Tokyo 103-8240 (JP)
(74) Representative: Henkel, Breuer & Partner
(86) International application number: PCT/JP2007/059197
(87) International publication number: WO 2008/139523

(56) References cited:
- WO-A1-00/35678
- JP-A- 08 002 553
- JP-A- 2002 178 450
- JP-A- 2006 175 729
- JP-B1- 3 929 065
- US-A1- 2004 149 774
- US-B1- 6 325 235

## Description

### FIELD OF THE INVENTION

The present invention relates to a polyester resin container with a fracturable portion according to claim 1 and its production method according to claim 7, and in particular, relates to the improved openability of a container with a fracturable portion that is prepared by using polyester resin as the raw material.

### BACKGROUND OF THE INVENTION

A twist-off type container having a fracturable structure is disclosed in Japanese Unexamined Patent Publication No. 2002-321750 A. The invention disclosed in the publication was filed by the present applicants. In the invention, olefin resin was used as the container material. Olefin resin is one of the most suitable resins for containers with a fracturable portion because olefin resin has excellent heat sealing performance, twist-off and snap-off operations are easy, and a fracture trace hardly remains.

Document US-A-4,787,536 discloses a polyester resin container with a fracturable portion.

The "Food for Specified Health Use" system was established in September of 1991. Since then, numerous so-called functional drinks such as dietary fiber drinks and calcium drinks, which have health-adjustment functions, have been on the market. When such functional drinks or liquid pharmaceuticals are filled into containers, it is preferable to use containers made of polyester resin rather than containers made of olefin resin. This is because, in the case of containers made of polyester resin, the smell of the resin does not spread to the contents, the resin is inactive against the contents, and the components of the contents do not adsorb on the resin.

[Patent Literature 1] Japanese Unexamined Patent Publication No. 2002-321750 A

### DISCLOSURE OF THE INVENTION

### PROBLEM TO BE SOLVED BY THE INVENTION

However, when a container with a fracturable portion is produced from a polyester resin, the heat sealing performance is poor, and there has been an issue in that a stringy phenomenon takes place because the polyester resin is viscous. Thus, it is difficult to twist off or snap off the fracturable portion. The present invention was made in order to solve the above-described problem, and the object of the invention is to provide a polyester resin container with a fracturable portion that has improved openability and to provide its production method.

### MEANS TO SOLVE THE PROBLEM

The present inventors formed a groove by irradiating a laser on the outer surface of the boundary part between the opening end of the mouth portion and the fracturable portion of a polyester resin container with a fracturable portion. Subsequently, natural cooling or rapid cooling was conducted. As a result, the polyester resin became brittle because the resin was made thin at the groove, and decreased in the intrinsic viscosity the resin at the periphery of the groove. Thus, the present inventors found that a polyester resin container with a fracturable portion with significantly improved openability could be obtained, leading to completion of the present invention.

That is to say, the polyester resin container with a fracturable portion of the present invention is **characterized in that**, the material of the container is polyester resin, the container comprises integrally a mouth portion contiguous to the container body and a fracturable portion located above the mouth portion, the container is equipped with a fracturable structure that can be opened by fracturing the boundary part between the opening end of the mouth portion and the fracturable portion; a groove is formed approximately perpendicular to the outer surface of the boundary part between the opening end of the mouth portion and the fracturable portion, and the intrinsic viscosity of the polyester resin located at the periphery of the groove is lower than the intrinsic viscosity of the polyester resin located at a location other than the periphery of the groove.

In the polyester resin container with a fracturable portion, it is preferable that the depth of the groove is 30-90% of the thickness of the periphery of the groove. In addition, it is preferable that the intrinsic viscosity of the polyester resin located at the periphery of the groove of the polyester resin container with a fracturable portion is 10% or more lower than the intrinsic viscosity of the polyester resin located at a location other than the periphery of the groove.

In addition, it is preferable that the density of the polyester resin located at the periphery of the groove is 1.38 g/cm³ or lower and the polyester resin is amorphous.

It is also preferable that the polyester resin, in the polyester resin container with a fracturable portion, is a homopolyester resin or a copolyester resin made of one or more acid components selected from the group consisting of adipic acid, terephthalic acid, 2,6-naphthalenedicarboxylic acid, 4,4-biphenylcarboxylic acid, oxalic acid, succinic acid, glutaric acid, pimelic acid, suberic acid, azelaic acid, sebacic acid, dodecanedionic acid, trans-1,4-cyclohexanedicarboxylic acid, and isophthalic acid; and one or more glycol components selected from the group consisting of ethylene glycol, trimethylene glycol (1,3-propanediol), tetramethylene glycol (1,4-butanediol), pentamethylene glycol, hexamethylene glycol, 1,4-cycrohexanedimethanol, bisphenol A, and spiroglycol; and that the polyester resin has an intrinsic viscosity of 0.8-1.5 dl/g.

It is also preferable that the polyester resin container with a fracturable portion comprises integrally a bottom portion; a body portion consisting of a rectangular parallelepiped part and a neck part; the mouth portion contiguous to the neck part; and the fracturable portion consisting of a spherical part, a plate tab part, and a thin-walled part, which are located above the mouth portion; the opening end of the mouth portion is sealed with the spherical part; the tab part is contiguous to the mouth portion via the thin-walled part; the tab part hangs down to the neck part over the mouth portion; and a groove is formed to both ends of the tab part, along the horizontal line perpendicular to the container axis, including the boundary part between the opening end of the mouth portion and the fracturable portion.

The production method of the polyester resin container with a fracturable portion of the present invention is **characterized in that**, the material of the container is polyester resin, the container comprises integrally a mouth portion contiguous to the container body and a fracturable portion located above the mouth portion, the container is equipped with a fracturable structure that can be opened by fracturing the boundary part between the opening end of the mouth portion and the fracturable portion; the method comprises at least a groove formation step in which a groove is formed by irradiating a laser approximately perpendicular to the outer surface of the boundary part between the opening end of the mouth portion and the fracturable portion, and a cooling step in which the groove is cooled naturally or rapidly after the groove formation step.

In the groove formation step of the production method of the polyester resin container with a fracturable portion, it is preferable that the groove formation step is conducted by irradiating laser light with an output of 1.0-100 W and a laser light diameter of 0.1-5.0 mm at a moving rate of 10-500 mm/sec. It is also preferable that the cooling step is conducted by maintaining the temperature at 0-50 °C for 0.1-30 seconds.

It is also preferable that the polyester resin, in the production method of the polyester resin container with a fracturable portion, is a homopolyester resin or a copolyester resin made of one or more acid components selected from the group consisting of adipic acid, terephthalic acid, 2,6-naphthalenedicarboxylic acid, 4,4-biphenylcarboxylic acid, oxalic acid, succinic acid, glutaric acid, pimelic acid, suberic acid, azelaic acid, sebacic acid, dodecanedionic acid, trans-1,4-cyclohexanedicarboxylic acid, and isophthalic acid; and one or more glycol components selected from the group consisting of ethylene glycol, trimethylene glycol (1,3-propanediol), tetramethylene glycol (1,4-butanediol), pentamethylene glycol, hexamethylene glycol, 1,4-cycrohexanedimethanol, bisphenol A, and spiroglycol; and that the polyester resin has an intrinsic viscosity of 0.8-1.5 dl/g.

It is also preferable that the production method of the polyester resin container with a fracturable portion further comprises a preform extrusion step in which a polyester resin preform is extruded from an extruder; a body and bottom formation step in which the preform is pinched with a mold, the bottom portions are joined and sealed, and a pressurized fluid is allowed to flow in from the opening end to form a body portion and a bottom portion at the lower section of the preform; a content filling step in which contents are filled from the opening end of the preform into the body portion; and a fracturable structure formation step in which the preform is pinched by a mold to join the top portions and to form a mouth portion and a fracturable portion at the upper section of the preform.

### EFFECT OF THE INVENTION

According to the present invention, in the polyester resin container with a fracturable portion, a laser is irradiated on the outer surface of the boundary part between the opening end of the mouth portion and the fracturable portion in order to form a groove. Subsequently natural cooling or rapid cooling is conducted. As a result, the resin becomes thin at the groove, and the intrinsic viscosity of the resin at the periphery of the groove decreases. Consequently, the polyester resin becomes brittle, and the polyester resin container with a fracturable portion with significantly improved openability can be obtained. In addition, in the polyester resin container with a fracturable portion of the present invention, the polyester resin located at the periphery of the groove is hydrolyzed because of heating with a laser. As a result, the molecular weight of the resin decreases, and the polyester resin becomes brittle and the openability can be improved. In addition, in the polyester resin container with a fracturable portion of the present invention, a laser light is irradiated under specific conditions and the subsequent natural cooling or rapid cooling is conducted when a groove is formed. Thus, an increase in the density of the polyester resin located at the periphery of the groove is suppressed. As a result, the polyester resin does not harden and becomes frangible.

### BRIEF DESCRIPTION OF THE DRAWINGS

Fig. 1 is a front view of the polyester resin container with a fracturable portion according to an embodiment of the present invention.
Fig. 2 is a side view of the polyester resin container with a fracturable portion according to an embodiment of the present invention.
Fig. 3 is a top view of the polyester resin container with a fracturable portion according to an embodiment of the present invention.
Fig. 4 shows the stepwise production method of the polyester resin container with a fracturable portion according to an embodiment of the present invention.

### DESCRIPTION OF REFERENCE NUMBERS

10: polyester resin container with a fracturable portion
12: bottom portion
14: rectangular parallelepiped part
16: neck part
18: body portion
20: mouth portion
22: opening end
30: fracturable portion
32: spherical part
34: tab part
36: thin-walled part
40: groove
42: through-hole
50: extruder
52: preform
54: body portion mold
56: auxiliary mold
58: cutter
60: lid with a delivery tube
62: filling nozzle
64: molding die for the fracturable portion

### BEST MODE FOR CARRYING OUT THE INVENTION

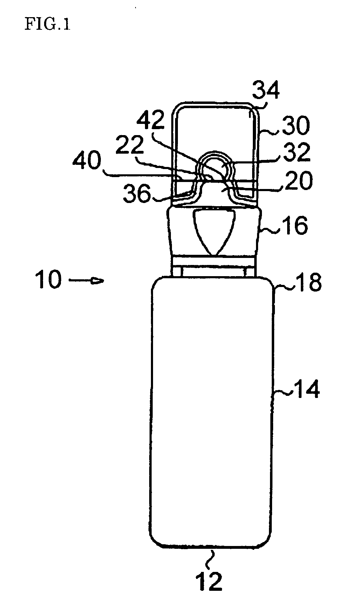

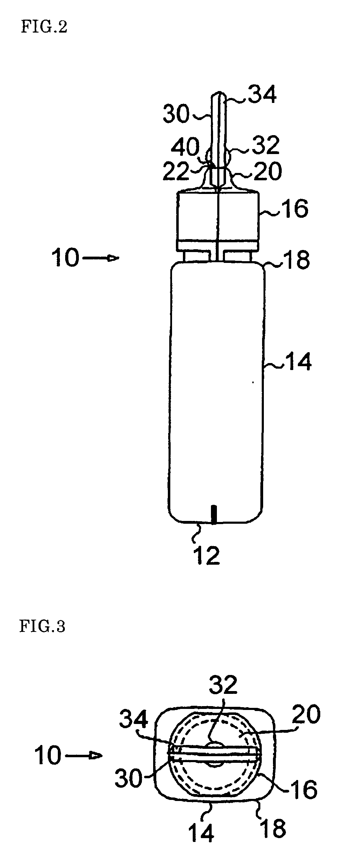

In the following, a preferable embodiment of the present invention is described with reference to the drawings.
A front view, a side view, and a top view of the polyester resin container with a fracturable portion according to an embodiment of the present invention are shown in Fig. 1, Fig. 2, and Fig. 3, respectively.

The polyester resin container 10 with a fracturable portion according to an embodiment of the present invention has an approximately rectangular flat bottom portion 12; a body portion 18 consisting of a tubular approximately rectangular parallelepiped part 14, which is contiguous to the bottom portion 12, and approximately cylindrical neck part 16; and a mouth portion 20 located above and contiguous to the neck part 16. To the top of the mouth portion 20, a fracturable portion 30, consisting of a hollow spherical part 32, a plate tab part 34, and a thin-walled part 36, is integrated. The opening end 22 of the mouth portion 20 is sealed with the spherical part 32, and the inside of the container body, consisting of the bottom portion 12, the body portion 14, and the mouth portion 20, is hollow. In addition, a thin-walled part 36 is formed around the mouth portion 20 and the spherical part 32, and it is connected to the plate tab part 34. The tab part 34 hangs down to the neck part 16 over the mouth portion 20. In order to let the opening easy, the thin-walled part 36 may be allowed to be a slit in the vicinity of the foot of the mouth portion 20, and it is only necessary that the slit is formed to the boundary part between the opening end 22 of the mouth portion 20 and the fracturable portion 30 (spherical part 32). This polyester resin container 10 with a fracturable portion is fractured and opened, at the time of use, at the boundary part between the opening end 22 of the mouth portion 20 and the fracturable portion 30 (spherical part 32). Thus, the contents such as functional drinks and liquid pharmaceuticals, which have been filled in the container in advance, can be poured out.

### <Formation of a Groove>

In the polyester resin container 10 with a fracturable portion according to an embodiment of the present invention, a carbon dioxide laser light is irradiated from both sides, along the approximately perpendicular direction, on the outer surface of the boundary part between the opening end 22 of the mouth portion and the fracturable portion 30 (spherical part 32); thus a groove 40 is formed. The temperature of the polyester resin located at the section irradiated by a laser light reaches the melting point or higher and the polyester resin sublimes. As a result, the groove 40 with a V-shaped cross section is formed on the outer surface. The groove 40 is formed to both ends of the tab part, along the horizontal line perpendicular to the container axis, including the boundary part between the opening end 22 of the mouth portion and the fracturable portion 30 (spherical part 32). Owing to the formation of the groove 40 on the outer surface of the boundary part, the resin becomes thin at the groove 40 and it becomes frangible. As a result, the boundary part between the opening end 22 of the mouth portion and the fracturable portion 30 (spherical part 32) can be easily fractured by twisting or bending the tab portion 34, and an opened section can be made.

Thus, the polyester resin container with a fracturable portion of the present invention is **characterized in that** a groove is formed along the approximately perpendicular direction to the outer surface of the boundary part between the opening end of the mouth portion and the fracturable portion. The depth of the groove is not limited in particular, and it is usually preferable that the depth of the groove is 30-90% of the thickness of the periphery of the groove. Although it depends upon what kind of a container it is, in the case of a general container, if the depth of the groove is less than 30% of the thickness of the periphery of the groove, the effect due to the formation of a groove may not be achieved. On the other hand, if the depth of the groove exceeds 90% of the thickness of the periphery of the groove, it becomes too thin and the opening may take place by a slight impact during transfer and so on. In the present embodiment, the depth of the groove was 0.25 mm, and it was about 31% of the thickness of the periphery of the groove; that was 0.8 mm.

In the polyester resin container 10 with a fracturable portion according to an embodiment of the present invention, through-holes 42 may be formed on both sides of the thin-walled part 36 located in the boundary part between the opening end of the mouth portion 22 and the fracturable portion 30. By the formation of such through-holes 42, the container becomes more frangible; as a result, the opening by twist-off or snap-off operation becomes easier.

### < Intrinsic Viscosity of the Polyester Resin in the Periphery of the Groove>

As described above, in the polyester resin container 10 with a fracturable portion according to an embodiment of the present invention, a groove 40 is formed by the irradiation of a carbon dioxide laser; subsequently, the groove 40 is naturally cooled or rapidly cooled. The remained polyester resin, without being sublimed, at the periphery of the groove 40 is melted by the irradiation of the laser light; as a result, the intrinsic viscosity of the resin is lowered. Accordingly, the polyester resin located at the periphery of the groove becomes brittle and can be easily fractured.

Thus, the polyester resin container with a fracturable portion of the present invention is **characterized in that** the intrinsic viscosity of the polyester resin located at the periphery of the groove is lower than the intrinsic viscosity of the polyester resin located at a location other than the periphery of the groove. More specifically, it is preferable that the intrinsic viscosity of the polyester resin located at the periphery of the groove is 10% or more lower than the intrinsic viscosity of the polyester resin located at a location other than the periphery of the groove. In the present embodiment, the intrinsic viscosity of the polyester resin located at the periphery of the groove was 0.85 dl/g, and it was about 15% lower than the intrinsic viscosity of the polyester resin located at a location other than the periphery of the groove; that was 1.0 dl/g.

In the polyester resin container 10 with a fracturable portion according to an embodiment of the present invention, the polyester resin located at the periphery of the groove 40 is melted by the irradiation of a laser light. Subsequently, the polyester resin is hydrolyzed by absorbing moisture in the air, resulting in a lower molecular weight. Accordingly, the polyester resin becomes brittle and can be easily fractured.

### <Density of the Polyester Resin at the Periphery of the Groove>

Generally, when a laser light is irradiated on a polyester resin to sublime and melt the resin, the spherocrystal formation takes place in the molten polyester resin and the density increases if the molten state is maintained for a long time. As a result, the polyester resin hardens and becomes infrangible; thus a twist-off or snap-off operation becomes difficult. On the other hand, in the polyester resin container 10 with a fracturable portion according to an embodiment of the present invention, a laser light is irradiated under specific conditions and the subsequent natural cooling or rapid cooling is conducted to form a groove 40. Thus, an increase in the density of the polyester resin at the periphery of the groove is suppressed and the density shows approximately the same value as the density of the polyester resin located at a location other than the periphery of the groove. Accordingly, the polyester resin does not harden and can be easily fractured.

Thus, it is preferable, in the polyester resin container with a fracturable portion of the present invention, that the density of the polyester resin at the periphery of the groove is 1.38 g/cm³ or less and that the polyester resin is amorphous. In the present embodiment, specifically, a laser light with an output of 30 W and a laser light diameter of 0.2 mm was irradiated by linearly moving it at 10-25 mm/sec. By subsequent natural cooling, the temperature changed from 300°C to 70 °C in 5 seconds. The density of the polyester resin at the periphery of the groove was 1.38 g/cm³. In the case of rapid cooling, the cooling takes place faster than the above-described natural cooling, the rate of which was 230 °C/5 sec.

### <Polyester Resin>

The container material used for the polyester resin container with a fracturable portion of the present invention is polyester resin. The polyester resin used in the present invention is not limited in particular, and preferable examples include homopolyester and copolyester resins made of one or more acid components selected from the group consisting of adipic acid, terephthalic acid, 2,6-naphthalenedicarboxylic acid, 4,4-biphenylcarboxylic acid, oxalic acid, succinic acid, glutaric acid, pimelic acid, suberic acid, azelaic acid, sebacic acid, dodecanedionic acid, trans-1,4-cyclohexanedicarboxylic acid, and isophthalic acid; and one or more glycol components selected from the group consisting of ethylene glycol, trimethylene glycol (1,3-propanediol), tetramethylene glycol (1,4-butanediol), pentamethylene glycol, hexamethylene glycol, 1,4-cycrohexanedimethanol, bisphenol A, and spiroglycol; the intrinsic viscosity of the polyester resin is preferably 0.8-1.5 dl/g, and more preferably 0.8-1.3 dl/g.

The specific preferable example of polyester resin used in the present invention is a polyester resin in which the acid component is terephthalic acid, and the diol component is 96 mol % ethylene glycol and 4 mol % 1,4-cyclohexanedimethanol or bisphenol A. The intrinsic viscosity of the thus obtained polyester resin is about 1.0 dl/g, no drawdown takes place in direct blow molding, and the melting point is about 235-245 °C and 10-30 °C lower than that of normal polyester resins. Therefore, the molding at low temperatures is possible; as a result, the rapid cooling is possible. In addition, the rate of crystallization is slow and the moldability is good; thus it is desirable as a polyester resin of the present invention.

### <Production Method>

The production method of the polyester resin container with a fracturable portion of the present invention is **characterized in that** the method comprises a groove formation step in which a groove is formed by irradiating a laser approximately perpendicular to the outer surface of the boundary part between the opening end of the mouth portion and the fracturable portion, and a cooling step in which the groove is cooled naturally or rapidly after the groove formation step.
In the production method of the polyester resin container with a fracturable portion of the present invention, there is no particular limitation in other steps so far as the above-described steps are present. However, the direct blow molding method is preferable because heat sealing is not necessary.

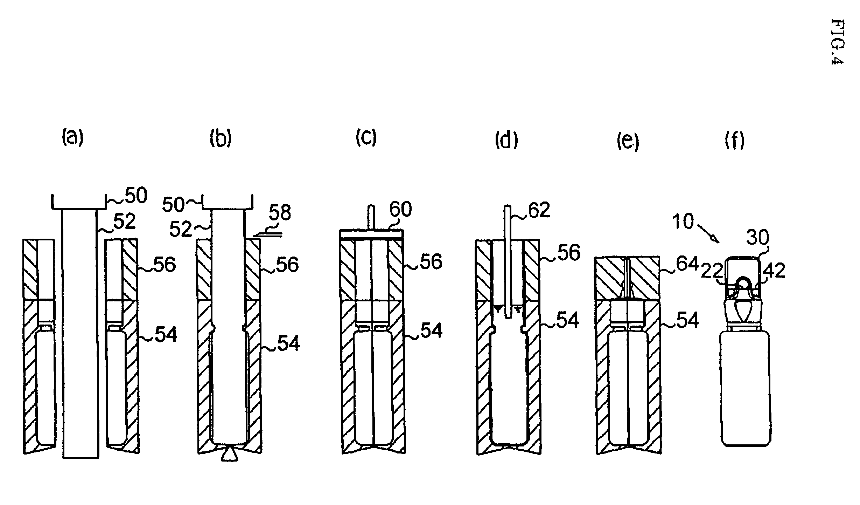

The production method of the polyester resin container with a fracturable portion, according to an embodiment of the present invention by direct blow molding, is stepwise shown in Fig. 4(a) to Fig. 4(f).
As shown in Fig. 4(a), when a tubular preform (usually called a "parison") 52, which is extruded from an extruder 50, reaches the set length, two half-pieces of the body portion mold 54, which has the outer surface geometry, on the inside, of the bottom portion 12 and the body portion 18 consisting of the rectangular parallelepiped part 14 and the neck part 16 of the polyester resin container; and two half-pieces of the auxiliary mold 56, which contacts the outer surface of the preform 52, close concurrently and pinch the preform 52. Then, as shown in Fig. 4(b), the bottom portion of the preform 52 is sealed, and the upper section of the preform 52 is cut by a running cutter 58 at the same time.

After the preform 52 is cut, it is immediately moved. As shown in Fig. 4(c), the auxiliary mold 56 is covered with a lid with a delivery tube 60. From the delivery tube, a pressurized fluid such as 10 atm compressed air is blown into the preform 52 under aseptic conditions. With the body portion mold 54, the lower portion of the preform 52 is molded into the bottom portion 12 and the body portion 18 consisting of the rectangular parallelepiped part 14 and the neck part 16. Subsequently, the lid with a delivery tube 60 is removed. As shown in Fig. 4(d), a filling nozzle 62 is inserted into the preform 52, to which the body portion 18 has been formed, and contents such as functional drinks or liquid pharmaceuticals are filled.

When the filling of contents is completed, the filling nozzle 62 is pulled out and the auxiliary mold 56 is opened. As shown in Fig. 4(e), the molding die for the fracturable portion 64, which has the outer surface geometry, on the inside, of the fracturable portion 30 consisting of the mouth portion 20, the spherical part 32, the tab part 34, and the thin-walled part 36, is closed, and a fracturable structure is formed on the upper side of the body portion 18.

The polyester resin container 10 with the formed fracturable structure is, as shown in Fig. 4(f), irradiated with a carbon dioxide laser to both ends of the tab portion, along the horizontal line perpendicular to the container axis, including the boundary part between the opening end 22 of the mouth portion and the fracturable portion 30. By the irradiation of the laser light, the temperature of the irradiated section reaches the melting point or higher, the section is melted and sublimed, and a horizontally-extending groove 40 with a V-shaped cross section is formed on the surface. This laser light is irradiated from both sides, and it is only necessary that the outer surface of the boundary part between the opening end 22 of the mouth portion and the fracturable portion 30 is irradiated. The laser light for the groove formation step is not limited in particular; however, it is preferable that the irradiation is performed, for example, by moving a laser light with an output of 1.0-100 W and a laser light diameter of 0.1-5.0 mm at a moving rate of 10-500 mm/sec. When the conditions of laser light irradiation are out of the above-described range, especially when the laser light irradiation time is long, the spherocrystal formation takes place in the polyester resin at the periphery of the groove. As a result, the density of the polyester resin increases and the polyester resin hardens, and the fracturable portion may become difficult to fracture in the twist-off or snap-off operation. In the present embodiment, the irradiation is performed by linearly moving a laser light with an output of 30 W and a laser light diameter of 0.2 mm at a moving rate of 10-25 mm/sec.

In the polyester resin container 10 with a fracturable portion according to an embodiment of the present invention, a through-hole 42 is formed in the thin-walled part on both sides of the boundary part by the irradiation of a laser light, of the above-described mode, along the horizontal line containing the boundary part between the opening end 22 of the mouth portion and the fracturable portion 30. By the formation of such a through-hole 42, the fracturable portion becomes frangible, and the opening by twist-off or snap-off operation becomes easier. The laser light may be irradiated only on the boundary part between the opening end 22 of the mouth portion and the fracturable portion 30 by spot irradiation, and it can be altered suitably.

After the groove 40 is formed by the laser light irradiation as described above, the groove 40 is naturally cooled on standing or rapidly cooled. In this cooling step, it is only necessary to maintain the groove, for example, at 0-50 °C for 0.1-30 seconds, and preferably at 10-20 °C for 5-10 seconds. After the irradiation of laser light, if the temperature is maintained at more than the polyester resin melting temperature or its vicinity for a long time, the spherocrystal formation takes place in the polyester resin at the periphery of the groove. As a result, the density of the polyester resin increases and the polyester resin hardens, and the fracturable portion may become difficult to fracture in the twist-off or snap-off operation.

In the thus produced polyester resin container with a fracturable portion of the present invention, a groove is formed by irradiating a laser on the outer surface of the boundary part between the opening end of the mouth portion and the fracturable portion. Subsequently natural cooling or rapid cooling is conducted. As a result, the resin becomes thin at the groove, and the intrinsic viscosity of the resin at the periphery of the groove decreases. Consequently, at the periphery of the groove, the polyester resin becomes brittle, and a polyester resin container with a fracturable portion with significantly improved openability can be obtained.

## Claims

1. A polyester resin container with a fracturable portion, in which the material of the container (10) is polyester resin, which comprises integrally a mouth portion (20) contiguous to a container body and a fracturable portion (30) located above the mouth portion (20), which is equipped with a fracturable structure that can be opened by fracturing a boundary part between an opening end (22) of the mouth portion (20) and the fracturable portion (30); wherein
a groove (40) is formed approximately perpendicular to an outer surface of the boundary part between the opening end (22) of the mouth portion (20) and the fracturable portion (30), **characterized in that**
the intrinsic viscosity of the polyester resin located at the periphery of the groove (40) is lower than the intrinsic viscosity of the polyester resin located at a location other than the periphery of the groove (40).

2. The polyester resin container with a fracturable portion according to claim 1, wherein the depth of the groove (40) is 30-90% of the thickness of the periphery of the groove (40).

3. The polyester resin container with a fracturable portion according to claim 1 or 2, wherein the intrinsic viscosity of the polyester resin located at the periphery of the groove (40) of the polyester resin container (10) with the fracturable portion (30) is 10% or more lower than the intrinsic viscosity of the polyester resin located at a location other than the periphery of the groove (40).

4. The polyester resin container with a fracturable portion according to any one of claim 1 to 3, wherein the density of the polyester resin located at the periphery is 1.38 g/cm³ or lower and the polyester resin is amorphous.

5. The polyester resin container with a fracturable portion according to any one of claim 1 to 4, wherein the polyester resin is a homopolyester resin or a copolyester resin made of one or more acid components selected from the group consisting of adipic acid, terephthalic acid, 2,6-naphthalenedicarboxylic acid, 4,4-biphenylcarboxylic acid, oxalic acid, succinic acid, glutaric acid, pimelic acid, suberic acid, azelaic acid, sebacic acid, dodecanedionic acid, trans-1,4-cyclohexanedicarboxylic acid, and isophthalic acid; and one or more glycol components selected from the group consisting of ethylene glycol, trimethylene glycol (1,3-propanediol), tetramethylene glycol (1,4-butanediol), pentamethylene glycol, hexamethylene glycol, 1,4-cycrohexanedimethanol, bisphenol A, and spiroglycol; and that the polyester resin has an intrinsic viscosity of 0.8-1.5 dl/g.

6. The polyester resin container with a fracturable portion according to any one of claim 1 to 5, which comprises
integrally a bottom portion (12);
a body portion (18) consisting of a rectangular parallelepiped part (14) and a neck part (16);
the mouth portion (20) contiguous to the neck part (16); and
the fracturable portion (30) consisting of a spherical part (32), a plate tab part (34), and a thin-walled part (36), which are located above the mouth portion (20);
the opening end (22) of the mouth portion (20) is sealed with the spherical part (32);
the tab part (34) is contiguous to the mouth portion (20) via the thin-walled part (36);
the tab part (34) hangs down to the neck part (16) over the mouth portion (20); and
the groove (40) is formed to both ends of the tab part (34), along a horizontal line perpendicular to the container axis, including the boundary part between the opening end (22) of the mouth portion (20) and the fracturable portion (30).

7. A production method of a polyester resin container with a fracturable portion, in which the material of the container (10) is polyester resin, the container (10) comprises integrally a mouth portion (20) contiguous to a container body and a fracturable portion (30) located above the mouth portion (20), and the container (10) is equipped with a fracturable structure that can be opened by fracturing a boundary part between an opening end (22) of the mouth portion (20) and the fracturable portion (30), **characterized in that** said method comprises at least
a groove formation step in which a groove (40) is formed by irradiating a laser approximately perpendicular to an outer surface of the boundary part between the opening end (22) of the mouth portion (20) and the fracturable portion (30), and
a cooling step in which the groove (40) is cooled naturally or rapidly after the groove formation step.

8. The production method of the polyester resin container with a fracturable portion according to claim 7, wherein
the groove formation step is conducted by irradiating laser light with an output of 1.0-100 W and a laser light diameter of 0.1-5.0 mm at a moving rate of 10-500 mm/sec.

9. The production method of the polyester resin container with a fracturable portion according to claim 7 or 8, wherein
the cooling step is conducted by maintaining the temperature at 0-50 °C for 0.1-30 seconds.

10. The production method of the polyester resin container with a fracturable portion according to any one of claim 7 to 9, wherein
the polyester resin is a homopolyester resin or a copolyester resin made of one or more acid components selected from the group consisting of adipic acid, terephthalic acid, 2,6-naphthalenedicarboxylic acid, 4,4-biphenylcarboxylic acid, oxalic acid, succinic acid, glutaric acid, pimelic acid, suberic acid, azelaic acid, sebacic acid, dodecanedionic acid, trans-1,4-cyclohexanedicarboxylic acid, and isophthalic acid; and one or more glycol components selected from the group consisting of ethylene glycol, trimethylene glycol (1,3-propanediol), tetramethylene glycol (1,4-butanediol), pentamethylene glycol, hexamethylene glycol, 1,4-cycrohexanedimethanol, bisphenol A, and spiroglycol; and that the polyester resin has an intrinsic viscosity of 0.8-1.5 dl/g.

11. The production method of the polyester resin container with a fracturable portion according to any one of claim 7 to 10, which further comprises
a preform extrusion step in which a polyester resin preform (52) is extruded from an extruder (50);
a body and bottom formation step in which the preform (52) is pinched with a mold (54), bottom portions are joined and sealed, and a pressurized fluid is allowed to flow in from an opening end to form a body portion (18) and a bottom portion (12) at the lower section of the preform (52);
a content filling step in which contents are filled from the opening end of the preform (52) into the body portion (18); and
a fracturable structure formation step in which the preform (52) is pinched by a mold (56) to join top portions and to form the mouth portion (20) and the fracturable portion (30) at the upper section of the preform (52).

## Patentansprüche

1. Ein Polyesterharzbehälter mit einem Sollbruchabschnitt, bei welchem das Material des Behälters (10) ein Polyesterharz ist, welcher integral einen Öffnungsabschnitt (20) anschließend an einen Behälterkörper und einen Sollbruchabschnitt (30), welcher oberhalb des Öffnungsabschnitts (20) angeordnet ist, aufweist, welcher mit einer Sollbruchstruktur ausgerüstet ist, die durch Brechen eines Grenzteils zwischen einem Öffnungsende (22) des Öffnungsabschnitts (20) und dem Sollbruchabschnitt (30) geöffnet werden kann, wobei
eine Nut (40) ungefähr senkrecht zu einer äußeren Oberfläche des Grenzteils zwischen dem Öffnungsende (22) des Öffnungsabschnitts (20) und dem Sollbruchabschnitt (30) ausgebildet ist, **dadurch gekennzeichnet, dass**
die Strukturviskosität des Polyesterharzes, welches in der Peripherie der Nut (40) befindlich ist, niedriger ist als die Strukturviskosität des Polyesterharzes, welches an einem andreren Ort als der Peripherie der Nut (40) befindlich ist.

2. Der Polyesterharzbehälter mit einem Sollbruchabschnitt gemäß Anspruch 1, wobei die Tiefe der Nut (40) 30-90 % der Dicke der Peripherie der Nut (40) beträgt.

3. Der Polyesterharzbehälter mit einem Sollbruchabschnitt gemäß Anspruch 1 oder 2, wobei die Strukturviskosität des Polyesterharzes, welches sich in der Peripherie der Nut (40) des Polyesterharzbehälters (10) mit dem Sollbruchabschnitt (30) befindet, um 10 % oder mehr niedriger als die Strukturviskosität des Polyesterharzes ist, welches sich an einem anderen Ort als der Peripherie der Nut (40) befindet.

4. Der Polyesterharzbehälter mit einem Sollbruchabschnitt gemäß einem der Ansprüche 1 bis 3, wobei die Dichte des Polyesterharzes, welches sich in der Peripherie befindet, 1,38 g/cm³ oder weniger beträgt und das Polyesterharz amorph ist.

5. Der Polyesterharzbehälter mit einem Sollbruchabschnitt gemäß einem der Ansprüche 1 bis 4, wobei das Polyesterharz ein Homopolyesterharz oder ein Copolyesterharz ist, welches aus einer oder mehreren Säurekomponenten, welche aus der Gruppe von Adipinsäure, Terephthalsäure, 2,6-Naphthalindicarbonsäure, 4,4-Biphenylcarbonsäure, Oxalsäure, Bernsteinsäure, Glutarsäure, Pimelinsäure, Korksäure, Azelainsäure, Sebacinsäure, Dodecandisäure, trans-1,4-Cyclohexandicarbonsäure und Isophthalsäure ausgewählt sind, und einer oder mehreren Glykolkomponenten, die aus der Gruppe von Ethylenglykol, Trimethylenglykol (1,3-Propandiol), Tetramethylenglykol (1,4-Butandiol), Pentamethylenglykol, Hexamethylenglykol, 1,4-Cyclohexandimethanol, Bisphenol A und Spiroglykol ausgewählt sind, hergestellt sind, und Polyesterharz über eine Strukturviskosität von 0,8-1,5 dl/g aufweist.

6. Der Polyesterharzbehälter mit einem Sollbruchabschnitt gemäß einem der Ansprüche 1 bis 5, mit:
integral einem Bodenabschnitt (12),
einem Körperabschnitt (18) bestehend aus einem rechtwinkligen Parallelepipedteil (14) und einem Halsabschnitt (16),
dem Öffnungsabschnitt (20) anschließend an den Halsabschnitt (16), und
dem Sollbruchabschnitt (30) bestehend aus einem sphärischen Abschnitt (32), einem flächigen Laschenabschnitt (34), und einem dünnwandigen Abschnitt (36), welche oberhalb des Öffnungsabschnitts (20) angeordnet sind,
wobei das Öffnungsende (22) des Öffnungsabschnitts (20) mit dem sphärischen Abschnitt (32) abgedichtet ist,
der Laschenabschnitt (34) über den dünnwandigen Abschnitt (36) an den Öffnungsabschnitt (32) anschließend angeordnet ist,
der Laschenabschnitt (34) über den Öffnungsabschnitt (20) bis zum Halsabschnitt (16) herab hängt, und
die Nut (40) bis zu beiden Enden des Laschenabschnitts (34) entlang einer horizontalen Linie, die senkrecht zu der Behälterachse verläuft, unter Einschluss des Grenzteils zwischen dem Öffnungsende (22) des Öffnungsabschnitts (20) und dem Sollbruchabschnitt (30) ausgebildet ist.

7. Ein Herstellungsverfahren für einen Polyesterharzbehälter mit einem Sollbruchabschnitt, wobei das Material des Behälters (10) ein Polyesterharz ist, der Behälter (10) integral einen Öffnungsabschnitt (20) anschließend an einen Behälterkörper und einen Sollbruchabschnitt (30), der oberhalb des Öffnungsabschnitts (20) ausgebildet ist, umfasst und der Behälter (10) mit einer Sollbruchstruktur ausgerüstet ist, die durch Brechen eines Grenzteils zwischen einem Öffnungsende (22) des Öffnungsabschnitts (20) und dem Sollbruchabschnitt (30) geöffnet werden kann, **dadurch gekennzeichnet, dass** das Verfahren mindestens umfasst:
einen Nutausbildungs-Schritt, in welchem eine Nut (40) durch Bestrahlen mit einem Laser ungefähr senkrecht zu einer äußeren Oberfläche des Grenzteils zwischen dem Öffnungsende (22) des Öffnungsabschnitts (20) und dem Sollbruchabschnitt (30) ausgebildet wird, und
einen Kühlungs-Schritt, in welchem die Nut (40) nach dem Nutausbildungsschritt auf natürliche Weise oder schnell gekühlt wird.

8. Das Herstellungsverfahren für einen Polyesterharzbehälter mit einem Sollbruchabschnitt gemäß Anspruch 7, wobei
der Nutausbildungs-Schritt durch Bestrahlung mit Laserlicht mit einem Output von 1,0-10 Watt und einem Laserlichtdurchmesser von 0,1-5,0 mm mit einer Bewegungsrate von 10-500 mm/s ausgeführt wird.

9. Das Herstellungsverfahren für den Polyesterharzbehälter mit einem Sollbruchabschnitt gemäß Anspruch 7 oder 8, wobei
der Kühlungs-Schritt durch Beibehalten einer Temperatur von 0-50°C über 0,1-30 Sekunden ausgeführt wird.

10. Das Herstellungsverfahren für den Polyesterharzbehälter mit einem Sollbruchabschnitt gemäß einem der Ansprüche 7 bis 9, wobei
wobei das Polyesterharz ein Homopolyesterharz oder ein Copolyesterharz ist, welches aus einer oder mehreren Säurekomponenten, welche aus der Gruppe von Adipinsäure, Terephthalsäure, 2,6-Naphthalindicarbonsäure, 4,4-Biphenylcarbonsäure, Oxalsäure, Bernsteinsäure, Glutarsäure, Pimelinsäure, Korksäure, Azelainsäure, Sebacinsäure, Dodecandisäure, trans-1,4-Cyclohexandicarbonsäure und Isophthalsäure ausgewählt sind, und einer oder mehreren Glykolkomponenten, die aus der Gruppe von Ethylenglykol, Trimethylenglykol (1,3-Propandiol), Tetramethylenglykol (1,4-Butandiol), Pentamethylenglykol, Hexamethylenglykol, 1,4-Cyclohexandimethanol, Bisphenol A und Spiroglykol ausgewählt sind, hergestellt ist, und das Polyesterharz eine Strukturviskosität von 0,8-1,5 dl/g aufweist.

11. Das Herstellungsverfahren für den Polyesterharzbehälter mit einem Sollbruchabschnitt gemäß einem der Ansprüche 7 bis 10, ferner mit:
einem Vorformungsextrusions-Schritt, in welchem eine Polyesterharzvorform (52) von einem Extruder (50) aus extrudiert wird,
einem Körper- und Bodenausbildungs-Schritt, in welchem die Vorform (52) mit einem Formwerkzeug (54) zusammengedrückt wird, Bodenabschnitte verbunden und abgedichtet werden und ein unter Druck gesetztes Fluid von einem Öffnungsende eingeströmt wird, um einen Körperabschnitt (18) und ein Bodenabschnitt (12) am unteren Abschnitt der Vorform (52) auszubilden,
einem Inhalteinbringungs-Schritt, in welchem Inhalte von dem Öffnungsende der Vorform (52) in den Körperabschnitt (18) eingefüllt werden, und
einem Sollbruchstruktur-Ausbildungsschritt, in welchem die Vorform (52) durch ein Formwerkzeug (56) zusammengedrückt wird, um die oberen Abschnitte zu verbinden und um den Öffnungsabschnitt (20) und den Sollbruchabschnitt (30) an dem oberen Bereich der Vorform (52) auszubilden.

## Revendications

1. Contenant en résine poly(ester) avec une portion fracturable, dans lequel le matériau du contenant (10) est une résine poly(ester), qui comprend solidairement une portion de goulot (20) contiguë à un corps de contenant et une portion fracturable (30) située au-dessus de la portion de goulot (20), qui est équipé d'une structure fracturable qui peut être ouverte en fracturant une partie formant frontière entre une extrémité d'ouverture (22) de la portion de goulot (20) et la portion fracturable (30) ; dans lequel
une gorge (40) est formée approximativement perpendiculairement à une surface externe de la partie de limite entre l'extrémité d'ouverture (22) de la portion de goulot (20) et la portion fracturable (30), **caractérisé en ce que**
la viscosité intrinsèque de la résine poly(ester) située à la périphérie de la gorge (40) est inférieure à la viscosité intrinsèque de la résine poly(ester) située à un emplacement autre que la périphérie de la gorge (40).

2. Contenant en résine poly(ester) avec une portion fracturable selon la revendication 1, dans lequel la profondeur de la gorge (40) est de 30 à 90 % de l'épaisseur de la périphérie de la gorge (40).

3. Contenant en résine poly(ester) avec une portion fracturable selon la revendication 1 ou 2, dans lequel la viscosité intrinsèque de la résine poly(ester) située à la périphérie de la gorge (40) du contenant en résine poly(ester) (10) avec la portion fracturable (30) est inférieure de 10 % ou plus à la viscosité intrinsèque de la résine poly(ester) située à un emplacement autre que la périphérie de la gorge (40).

4. Contenant en résine poly(ester) avec une portion fracturable selon l'une quelconque des revendications 1 à 3, dans lequel la masse volumique de la résine poly(ester) située à la périphérie est de 1,38 g/cm³ ou moins et la résine poly(ester) est amorphe.

5. Contenant en résine poly(ester) avec une portion fracturable selon l'une quelconque des revendications 1 à 4, dans lequel la résine poly(ester) est une résine homopolyester ou une résine copolyester réalisée en un ou plusieurs composants acides choisis dans le groupe constitué par l'acide adipique, l'acide téréphtalique, l'acide 2,6-naphtalènedicarboxylique, l'acide 4,4-biphénylcarboxylique, l'acide oxalique, l'acide succinique, l'acide glutarique, l'acide pimélique, l'acide subérique, l'acide azélaïque, l'acide sébacique, l'acide dodécanedionique, l'acide trans-1,4-cyclohexanedicarboxylique et l'acide isophtalique ; et en un ou plusieurs composants glycols choisis dans le groupe constitué par l'éthylène glycol, le triméthylène glycol (1,3-propanediol), le tétraméthylène glycol (1,4-butanediol), le pentaméthylène glycol, l'hexaméthylène glycol, le 1,4-cyclohexanediméthanol, le bisphénol A et le spiroglycol ; et la résine poly(ester) a une viscosité intrinsèque de 0,8 à 1,5 dL/g.

6. Contenant en résine poly(ester) avec une portion fracturable selon l'une quelconque des revendications 1 à 5, qui comprend
solidairement une portion de fond (12) ;
une portion de corps (18) constituée par une partie parallélépipédique rectangulaire (14) et une partie de col (16) ;
la portion de goulot (20) étant contiguë à la partie de col (16) ; et
la portion fracturable (30) constituée par une partie sphérique (32), une partie de languette en plaque (34), et une partie à paroi fine (36), qui sont situées au-dessus de la portion de goulot (20) ;
l'extrémité d'ouverture (22) de la portion de goulot (20) est scellée avec la partie sphérique (32) ;
la partie de languette (34) est contiguë à la portion de goulot (20) via la partie à paroi fine (36) ;
la partie de languette (34) tombe sur la partie de col (16) par-dessus la portion de goulot (20) ; et
la gorge (40) est formée sur les deux extrémités de la partie de languette (34), le long d'une ligne horizontale perpendiculaire à l'axe du contenant, comprenant la partie de limite entre l'extrémité d'ouverture (22) de la portion de goulot (20) et la portion fracturable (30).

7. Procédé de production d'un contenant en résine poly(ester) avec une portion facturable, dans lequel le matériau du contenant (10) est la résine poly(ester), le contenant (10) comprend solidairement une portion de goulot (20) contiguë à un corps de contenant et une portion fracturable (30) située au-dessus de la portion de goulot (20), et le contenant (10) est équipé d'une structure fracturable qui peut être ouverte en fracturant une partie de limite entre une extrémité d'ouverture (22) de la portion de goulot (20) et la portion fracturable (30) ; **caractérisé en ce que** ledit procédé comprend au moins
une étape de formation de gorge (40) dans laquelle une gorge (40) est formée en irradiant un laser approximativement perpendiculairement à une surface externe de la partie de limite entre l'extrémité d'ouverture (22) de la portion de goulot (20) et la portion fracturable (30) ; et
une étape de refroidissement dans laquelle la gorge (40) est refroidie naturellement ou rapidement après l'étape de formation de gorge.

8. Procédé de production du contenant en résine poly(ester) avec une portion facturable selon la revendication 7, dans lequel
l'étape de formation de gorge est effectuée en irradiant une lumière laser avec une puissance fournie de 1,0 à 100 W et un diamètre de lumière laser de 0,1 à 5,0 mm à une vitesse de déplacement de 10 à 500 mm/s.

9. Procédé de production du contenant en résine poly(ester) avec une portion facturable selon la revendication 7 ou 8, dans lequel
l'étape de refroidissement est effectuée en maintenant la température à 0 à 50 °C pendant 0,1 à 30 secondes.

10. Procédé de production du contenant en résine poly(ester) avec une portion facturable selon l'une quelconque des revendications 7 à 9, dans lequel
la résine poly(ester) est une résine homopolyester ou une résine copolyester réalisée en un ou plusieurs composants acides choisis dans le groupe constitué par l'acide adipique, l'acide téréphtalique, l'acide 2,6-naphtalènedicarboxylique, l'acide 4,4-biphénylcarboxylique, l'acide oxalique, l'acide succinique, l'acide glutarique, l'acide pimélique, l'acide subérique, l'acide azélaïque, l'acide sébacique, l'acide dodécanedionique, l'acide trans-1,4-cyclohexanedicarboxylique et l'acide isophtalique ; et en un ou plusieurs composants glycols choisis dans le groupe constitué par l'éthylène glycol, le triméthylène glycol (1,3-propanediol), le tétraméthylène glycol (1,4-butanediol), le pentaméthylène glycol, l'hexaméthylène glycol, le 1,4-cyclohexanediméthanol, le bisphénol A et le spiroglycol ; et la résine poly(ester) a une viscosité intrinsèque de 0,8 à 1,5 dL/g.

11. Procédé de production du contenant en résine poly(ester) avec une portion facturable selon l'une quelconque des revendications 7 à 10, qui comprend en outre
une étape d'extrusion de préforme dans laquelle une préforme en résine poly(ester) (52) est extrudée à partir d'une extrudeuse (50) ;
une étape de formation de corps et de fond dans laquelle la préforme (52) est pincée avec un moule (54), les portions de fond sont assemblées et scellées, et on laisse un fluide sous pression s'écouler depuis une extrémité d'ouverture afin de former une portion de corps (18) et une portion de fond (12) au niveau de la section inférieure de la préforme (52) ;
une étape de chargement de contenu dans laquelle les contenus sont chargés depuis l'extrémité d'ouverture de la préforme (52) dans la portion de corps (18) ; et
une étape de formation de structure fracturable dans laquelle la préforme (52) est pincée par un moule (56) afin d'assembler les portions de dessus et de former la portion de goulot (20) et la portion fracturable (30) au niveau de la section supérieure de la préforme (52).
